# EUROPEAN PATENT SPECIFICATION

(11) **EP 3 237 984 B1**
(45) Date of publication and mention of the grant of the patent: **19.12.2018**
(21) Application number: 15798225.7
(22) Date of filing: 03.11.2015
(51) Int. Cl.: G05D 1/02, A01D 34/00

(54) **AREA EXCLUSION FOR OPERATION OF A ROBOTIC VEHICLE**
BEREICHSAUSSCHLUSS FÜR DEN BETRIEB EINES ROBOTERFAHRZEUGS
EXCLUSION DE ZONE DE FONCTIONNEMENT D'UN VÉHICULE ROBOTIQUE

(30) Priority: 22.12.2014 US 201462095209 P
(43) Date of publication of application: 01.11.2017
(73) Proprietor: Husqvarna AB, 561 82 Huskvarna (SE)
(72) Inventor: JÄGENSTEDT, Patrik, S-56030 Tenhult (SE); KAMFORS, Mattias, S-55448 Jönköping (SE); GRUFMAN, Stefan, S-56434 Bankeryd (SE)
(86) International application number: PCT/IB2015/058498
(87) International publication number: WO 2016/103070

(56) References cited:
- EP-A2- 2 390 741
- EP-A2- 2 390 746
- WO-A1-2014/027946
- US-A1- 2010 076 599
- US-A1- 2010 324 731

## Description

### CROSS REFERENCE TO RELATED APPLICATIONS

The present application claims priority to U.S. patent application number 62/095,209 filed December 22, 2014, which is expressly incorporated by reference in its entirety.

### TECHNICAL FIELD

Example embodiments generally relate to robotic vehicles, such as mowing devices, and more particularly robotic vehicles that are configurable to operate within one or more areas within a parcel, while not working and/or entering one or more exclusion areas.

### BACKGROUND

Yard maintenance tasks are commonly performed using various tools and/or machines that are configured for the performance of corresponding specific tasks. Certain tasks, like grass cutting, are typically performed by lawn mowers. Lawn mowers themselves may have many different configurations to support the needs and budgets of consumers. Walk-behind lawn mowers are typically compact, have comparatively small engines and are relatively inexpensive. Meanwhile, at the other end of the spectrum, riding lawn mowers, such as lawn tractors, can be quite large. More recently, robotic vehicles and/or remote controlled mowers have also become options for consumers to consider.

Lawn mowers are typically capable of transiting over even and uneven terrain to execute yard maintenance activities relating to mowing. However, most lawn mowers are repeatedly exposed to the same operating environments over the course of their lifetimes. For example, a lawn mower may operate to cut a single yard over its entire life, or may operate to cut a relatively fixed series of yards or parcels if it is used for commercial purposes. Given that computing devices are becoming more ubiquitous, it is to be expected that they may be employed to assist in operation of lawn mowers. As such, many additional functionalities may be provided or supported by the employment of computing devices on lawn mowers.

### BRIEF SUMMARY OF SOME EXAMPLES

Some example embodiments may therefore provide a robotic vehicle (e.g., a lawn device) having an onboard vehicle positioning module that may be configured to reference a map that is associated with the parcel currently worked. The map may include defined boundaries for one or more areas of operation of the device, including one or more exclusion zones that can be defined or selected by an operator. In some embodiments, the boundaries of the exclusion zones, for example, may be defined relative to known locations of one or more reference objects (e.g., physical objects, GPS coordinates, sensors, virtual pins provided by an operator, wearable sensors that may be worn in the parcel) that are detectable via an object detection module and/or positioning module.

Some embodiments may comprise methods of controlling the operation of a robotic vehicle relative to a parcel of land. For instance, some embodiments may comprise receiving map data descriptive of a parcel of land and receiving information indicative of at least one reference object physically or virtually (e.g., a virtual pin positioned by an operator) by located within the parcel, in which the reference object may have corresponding information for defining boundaries for an exclusion area on the parcel associated therewith. The exclusion area may define an area to not be worked and/or entered by a robotic vehicle. The method may also include determining the boundaries responsive to detection of the at least one reference object and operating the robotic vehicle to remain outside the area defined by the boundaries.

Additionally, some example embodiments may provide a robotic vehicle including processing circuitry configured for receiving map data descriptive of a parcel of land and receiving information indicative of at least one reference object physically or virtually (e.g., a virtual pin positioned by an operator) by located within the parcel, in which the reference object may have corresponding information for defining boundaries for an exclusion area on the parcel associated therewith. The exclusion area may define an area to not be worked and/or entered by a robotic vehicle. The method may also include determining the boundaries responsive to detection of the at least one reference object and operating the robotic vehicle to remain outside the area defined by the boundaries.

Some example embodiments may improve the ability of operators and/or fleet managers to make lawn vehicles (e.g., mowers) operate safely and/or efficiently.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates an example operating environment for a robotic vehicle;
FIG. 2A illustrates a schematic view of a base plate and various components of the robotic vehicle according to an example embodiment;
FIG. 2B illustrates a schematic view of an inner housing and various other components of the robotic vehicle according to an example embodiment;
FIG. 3 illustrates an example operating environment for a robotic vehicle that may employ an example embodiment;
FIG. 4 illustrates an example of map data that may be defined to represent all or a portion of the parcel according to an example embodiment;
FIG. 5 illustrates a block diagram of various components of processing circuitry of the robotic vehicle to illustrate some of the components that enable the functional performance of the robotic vehicle and to facilitate description of an example embodiment;
FIG. 6 illustrates an example in which a plurality of discrete areas, including an exclusion areas selected by a virtual pin dropped an operator on a graphical representation of map data according to an example embodiment;
FIG. 7 illustrates a block diagram of a method according to an example embodiment; and
FIG. 8 illustrates a block diagram of a method according to an additional example embodiment.

### DETAILED DESCRIPTION

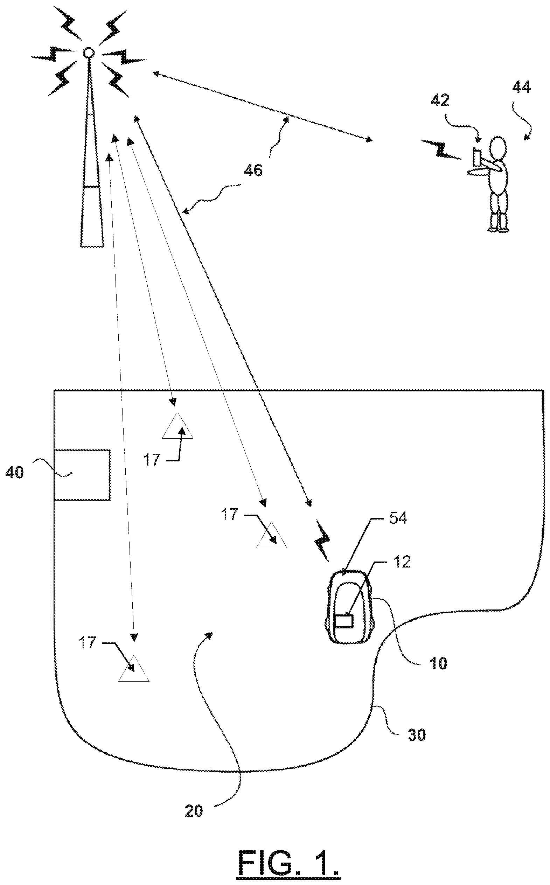

Robotic vehicles (e.g., robotic mowers, robotic watering devices, robotic tillers, etc.) typically operate in an area that is defined by a boundary wire that bounds the area to be treated (e.g., mowed). The robotic vehicle than roams within the bounded area to ensure that the entire area is mowed, but the robotic vehicle does not go outside of the bounded area. FIG. 1 illustrates an example operating environment for a robotic vehicle 10 that may employ a system bounded by such a boundary wire. The robotic vehicle 10 may operate to cut grass on a parcel 20 (i.e., a land lot), the boundaries of which may be defined using one or more physical boundaries (e.g., a fence, wall, curb and/or the like), a boundary wire 30 or combinations thereof. The boundary wire 30 may emit electrical signals that are detectable by the robotic vehicle 10 to inform the robotic vehicle 10 when a boundary of the parcel 20 has been reached. The robotic vehicle 10 may be controlled, at least in part, via control circuitry 12 located onboard. The control circuitry 12 may include, among other things, the ability to detect the boundary wire 30 to redirect the robotic vehicle 10 to other areas within the parcel 20.

In an example embodiment, the robotic vehicle 10 may be battery powered via one or more rechargeable batteries. Accordingly, the robotic vehicle 10 may be configured to return to a charge station 40 that may be located at some position on the parcel 20 in order to recharge the batteries. The batteries may power a drive system and a blade control system of the robotic vehicle 10. However, the control circuitry 12 of the robotic vehicle 10 may selectively control the application of power or other control signals to the drive system and/or the blade control system to direct the operation of the drive system and/or blade control system. Accordingly, movement of the robotic vehicle 10 over the parcel 20 may be controlled by the control circuitry in a manner that enables the robotic vehicle 10 to systematically traverse the parcel while operating a cutting blade to cut the grass on the work area of the parcel 20.

In some embodiments, the control circuitry 12 may be configured to communicate wirelessly with an electronic device 42 (e.g., a computer, mobile telephone, PDA, smart phone, and/or the like) of a remote operator 44 via a wireless communication network 46. Alternatively or additionally, the control circuitry 12 may also be configured to communicate wirelessly with an one or more reference objects, such as sensors 17 (e.g., stationary sensors or wearable or mobile sensors), directly or indirectly through the network 46 as shown in FIG. 1. In this regard, the electronic device 42 (e.g., a computer, mobile telephone, PDA, smart phone, and/or the like) of the remote operator 44 may also communicate with one or more sensors 17 via the wireless communication network 46. However, the wireless network 46 and other remote devices may not be employed in some embodiments. The wireless network 46 may be a data network, such as a local area network (LAN), a metropolitan area network (MAN), a wide area network (WAN) (e.g., the Internet), and/or the like, which may couple the robotic vehicle 10 to devices such as processing elements (e.g., personal computers, server computers or the like) or databases. Communication between the wireless network 46 and the devices or databases (e.g., servers, electronic device 42, control circuitry 12) may be accomplished by either wireline or wireless communication mechanisms and corresponding protocols.

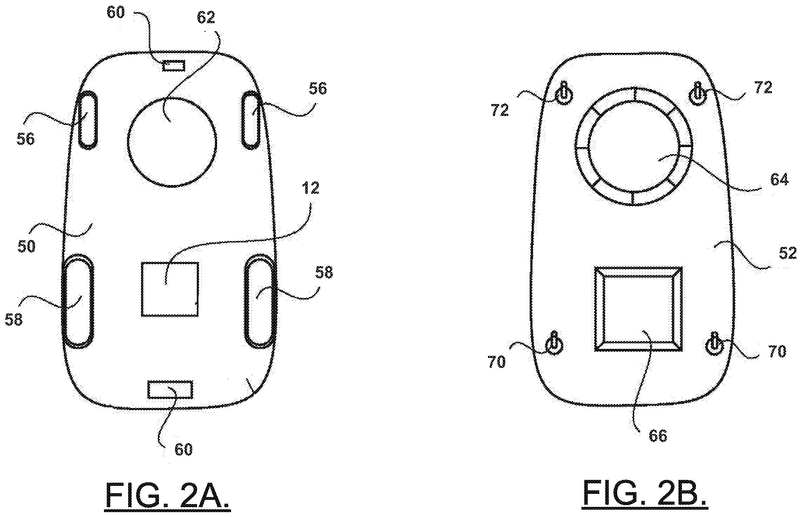

FIG. 2, which includes FIGS. 2A and 2B, illustrates some of the parts that may be employed in connection with an example of the robotic vehicle 10. However, it should be appreciated that example embodiments may be employed on numerous other vehicles that may employ different designs. FIG. 2A illustrates a schematic view of a base plate and various components of the robotic vehicle according to an example embodiment and FIG. 2B illustrates a schematic view of an inner housing and various other components of the robotic vehicle according to an example embodiment.

Referring to FIGS. 1 and 2, the robotic vehicle 10 may include a base plate 50, an inner housing 52 and an outer housing 54. The inner housing 52 may be configured to be arranged on top of the base plate 50 and the outer housing 54 may be configured to be arranged on top of the inner housing 52. The base plate 50 may form a support structure from which one or more front wheels 56 and one or more rear wheels 58 may be supported. In some embodiments, the one or more rear wheels 58 may be relatively large as compared to the one or more front wheels 56. Moreover, the one or more rear wheels 58 may be configured to operate either in a forward or backward direction, but may otherwise not be steerable. However, the one or more front wheels 56 may be steerable responsive to control by the control circuitry 12. Alternatively, the front wheels 56 may be swivel wheels capable of following any direction as required by the control of the rear wheels 58.

In an example embodiment, the base plate 50 may further include one or more sensors 60 that may be used to detect the boundary wire 30 and/or objects that may form part of the boundary of the parcel. The sensors 60 may also detect objects that may be encountered during operation of the robotic vehicle 10 within the boundaries of the parcel 20. These objects may be fixed or temporary (e.g., movable) objects. In some cases, the sensors 60 may include a front sensor and a rear sensor. However, it should be appreciated that any number of sensors may be employed and they may be disposed at any desirable location on the robotic vehicle 10. The sensors 60 may include sensors related to positional determination (e.g., a GPS receiver, an accelerometer, a camera, a radar transmitter/detector, an ultrasonic sensor, a laser scanner and/or the like). Thus, for example, positional determinations may be made using GPS, inertial navigation, optical flow, radio navigation, visual location (e.g., VSLAM) and/or other positioning techniques or combinations thereof. Accordingly, the sensors 60 may be used, at least in part, for determining the location of the robotic vehicle 10 relative to boundaries or other points of interest (e.g., a starting point or other key features) of the parcel 20, or determining a position history or track of the robotic vehicle 10 over time.

The base plate 50 may further support a cutting motor 62 configured to drive a cutting blade or other cutters of the robotic vehicle 10. In some embodiments, the outer housing 54 and the inner housing 52 may be plastic, light metal, or other similarly lightweight components. The inner housing 52 may include a cover 64 for the cutting motor 62. In some embodiments, a user interface (e.g., display 66) may be provided on the inner housing 52. The user interface may be employed to interface with the control circuitry 12 for controlling operations of the robotic vehicle 10.

In some embodiments, the sensors 60 may include sensors specifically provided for detecting objects (other than the boundary wire 30 or objects forming boundaries of the parcel 20) and/or sensors for detecting lifting (or tipping beyond a threshold amount) of the robotic vehicle 10. Alternatively, separate sensors (e.g., collision sensors 70 and lifting sensors 72) may be provided for each function, and those sensors may be capable of communicating with the control circuitry 12 in addition to the sensors 60. In an example embodiment, the sensors 60 may include a camera, which may be used to optically determine the existence of objects in view of the camera and, in some embodiments, may be configured to determine or distinguish an identity of the object (e.g., to determine if an object is a reference object).

The type of work area definition described above tends to work well for many users. However, some users may find installation of the boundary wire 30 to be a relatively difficult and time consuming task. Furthermore, if the boundary wire 30 is damaged, it may be relatively difficult to repair. Additionally, both the initial cost of the boundary wire 30, and any replacement cost that might be encountered if the boundary wire 30 is destroyed, add to the overall cost of the system. Thus, it may be advantageous to define the work area by another mechanism that is less costly and less work intensive.

Some example embodiments may therefore be provided that enable a work area to be defined relative to map data indicative of the parcel. Accordingly, for example, one or more reference objects (e.g., GPS coordinates, virtual pin, etc.) may be defined on the map and boundaries for the work area may be defined in relation to the one or more reference objects. The robotic vehicle may therefore identify a reference object. The robotic vehicle may further be enabled to determine its position relative to the reference object and boundaries that are defined relative to the reference object based on tracking its position relative to the map data. Accordingly, with potentially less physical effort and less cost, the bounded area in which the robotic vehicle is to work may be reliably defined.

In an example embodiment, a robotic vehicle (e.g., a remote-controlled or autonomously operable robotic vehicle, watering robot, and/or the like) is provided with an onboard positioning module and an object detection module. The positioning module may be configured to enable data related to position and/or orientation information regarding the vehicle to be tracked and/or recorded. The position and/or orientation information may then be stored and/or processed (e.g., by onboard or remote processing and storage equipment) to generate or augment map data associated with a parcel being worked. The map data may include defined boundaries for operation of the vehicle and may also define the location of reference objects located within (or at edges of) the boundaries, where the reference objects are used as points of reference from which the boundaries are defined using the map data. The object detection module may be configured to detect objects encountered by the device during operation on within the boundaries. Responsive to detection of an object that corresponds to a reference object, the object detection module may be configured to inform the positioning module of the detection so that the positioning module can be used in connection with the object detection module for determining a position of a boundary relative to the reference object. The robotic vehicle may then be steered or otherwise operated accordingly. In this regard, for example, the robotic vehicle may be steered away when any boundary is reached.

Additionally or alternatively, some embodiments may be employed to provide feedback, warnings, or even implement automatic functionality (e.g., stopping blade rotation and/or stopping drive power application) responsive to detection of movement outside of the bounded area.

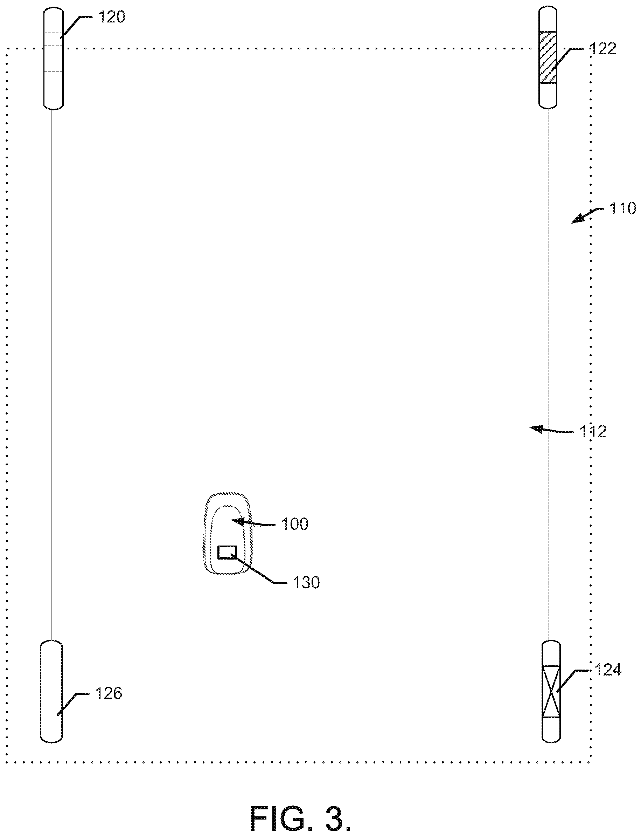

FIG. 3 illustrates an example environment in which the robotic vehicle 100 of an example embodiment may operate. The robotic vehicle 100 may be battery powered, as described above, and may charge at a charging station and also have the communication capabilities described above. The robotic vehicle 100 may also include similar sensors and other structural components to those described above. As shown in FIG. 3, a parcel 110 may include a plurality of reference objects (e.g., a first reference object 120, a second reference object 122, a third reference object 124 and a fourth reference object 126). The reference objects may, in this example, be positioned at four corners of a rectangular shaped region on the parcel 110 to define a work area 112. However, it should be appreciated that the reference objects could be positioned to define any desirable shape, and that the reference objects need not necessarily be positioned at corners or even edges of the parcel 110. It should also be noted that although the reference objects are each shown as posts or stakes that have uniquely different markings thereon, it is not necessary that reference objects include any markings at all, much less distinct markings. However, some embodiments may employ identifying indicia, so that the robotic vehicle 100 can determine which specific reference object is being encountered at any given time. For instance, the reference objects may comprise GPS coordinates or virtual pins provided by an operator on the map data.

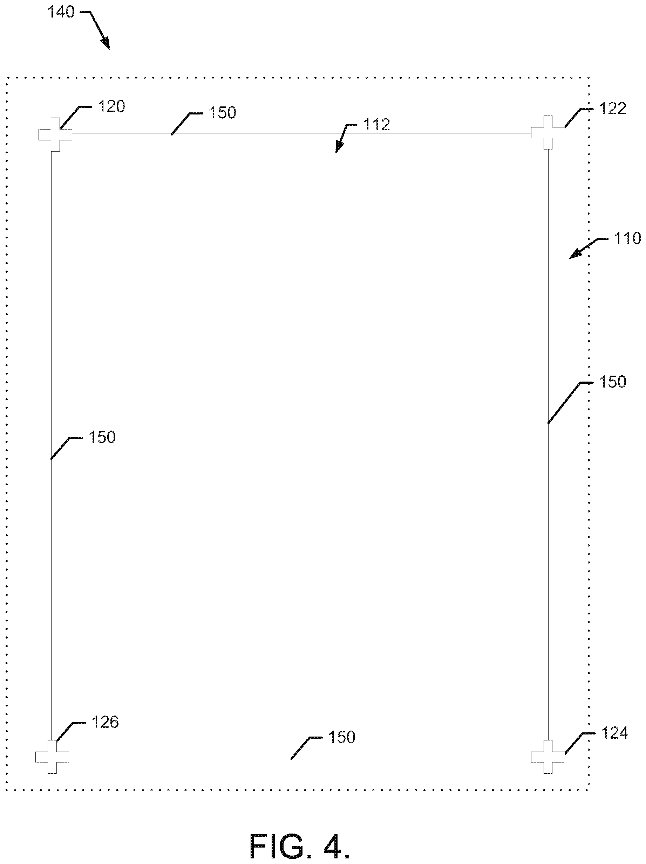

In an example embodiment, the robotic vehicle 100 may include control circuitry 130 that is used to control operation of the robotic vehicle 100 (e.g., direction and/or speed of movement, blade rotation, and/or the like). The robotic vehicle 100 may further include a positioning module and an object detection module (each of which will be described in greater detail below), which operate with or under control of the control circuitry 130. Accordingly, the robotic vehicle 100 may utilize the control circuitry 130 to define map data 140 indicative of the work area 112 on the parcel 110 in terms of defining the boundaries of the work area and/or the location of reference objects thereon. FIG. 4 illustrates an example of map data 140 that may be defined to represent all or a portion of the parcel 110. As seen in FIG. 4, the map data 140 may include recorded positions of the reference objects, such as reference coordinates (e.g., GPS coordinates), (represented schematically as generic crosses in FIG. 4). The map data 140 may further define boundaries 150 relative to the positions of the reference objects.

It should be appreciated that although the boundaries 150 are defined as discrete segments that extend between individual ones of the reference objects (e.g., a first segment extending between the first reference object 120 and the second reference object 122, a second segment extending between the second reference object 122 and the third reference object 124, a third segment extending between the third reference object 124 and the fourth reference object 126, and a fourth segment extending between the fourth reference object 126 and the first reference object 120), segments of the boundaries 150 need not extend between two reference objects, or even extend from a single reference object. Instead, boundaries 150 may be defined relative to one or more reference objects (e.g., based on a distance and direction from a reference object, or based on a range of distances over a corresponding range of directions from the reference object). However, in some embodiments, regardless of how the boundaries 150 are defined, the boundaries 150 may form a continuous peripheral limit for a work area of the robotic vehicle 100.

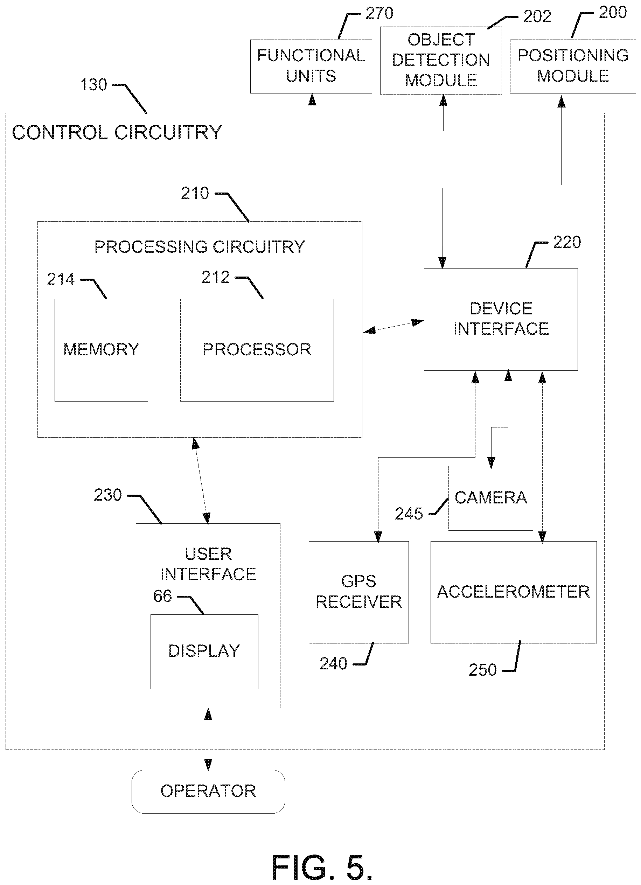

FIG. 5 illustrates a block diagram of various components of the control circuitry 130 to illustrate some of the components that enable the functional performance of the robotic vehicle 100 and to facilitate description of an example embodiment. In some example embodiments, the control circuitry 130 may include or otherwise be in communication with positioning module 200 and an object detection module 202 disposed at the robotic vehicle 100. As such, for example, the functions attributable to the positioning module 200 and/or the object detection module 202 may be carried out by the control circuitry 130.

The control circuitry 130 may include processing circuitry 210 that may be configured to perform data processing, control function execution and/or other processing and management services according to an example embodiment of the present invention. In some embodiments, the processing circuitry 210 may be embodied as a chip or chip set. In other words, the processing circuitry 210 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The processing circuitry 210 may therefore, in some cases, be configured to implement an embodiment of the present invention on a single chip or as a single "system on a chip." As such, in some cases, a chip or chipset may constitute means for performing one or more operations for providing the functionalities described herein.

In an example embodiment, the processing circuitry 210 may include one or more instances of a processor 212 and memory 214 that may be in communication with or otherwise control a device interface 220 and, in some cases, a user interface 230 (e.g., display 66). As such, the processing circuitry 210 may be embodied as a circuit chip (e.g., an integrated circuit chip) configured (e.g., with hardware, software or a combination of hardware and software) to perform operations described herein. However, in some embodiments, the processing circuitry 210 may be embodied as a portion of an on-board computer. In some embodiments, the processing circuitry 210 may communicate with electronic components and/or sensors (e.g., sensors 60, collision sensors 70 and/or lifting sensors 72) of the robotic vehicle 100 via a single data bus. As such, the data bus may connect to a plurality or all of the switching components and/or other electrically controlled components of the robotic vehicle 100.

The user interface 230 (if implemented) may be in communication with the processing circuitry 210 to receive an indication of a user input at the user interface 230 and/or to provide an audible, visual, mechanical or other output to the user. As such, the user interface 230 may include, for example, a display (e.g., display 66), one or more buttons or keys (e.g., function buttons), and/or other input/output mechanisms (e.g., microphone, speakers, cursor, joystick, lights and/or the like). In this regard, user interface 230 may be in communication with the processing circuitry 210 to receive an indication of a user input, such as time-scheduling instructions and/or task specific instructions for one or more discrete areas within the parcel or instructions to exclude one or more discrete areas from the operational schedule, at the user interface 230.

The device interface 220 may include one or more interface mechanisms for enabling communication with other devices (e.g., sensors of a sensor network including sensors 60, collision sensors 70 and/or lifting sensors 72 and/or other accessories or functional units 270 such as motors, servos, switches or other operational control devices for automatic responses). In some cases, the device interface 220 may be any means such as a device or circuitry embodied in either hardware, or a combination of hardware and software that is configured to receive and/or transmit data from/to sensors in communication with the processing circuitry 210. In some example embodiments, the device interface 220 may provide interfaces for communication of components internal to the positioning module 200 and/or the object detection module 202 (as shown in the example of FIG. 5). However, in other embodiments, components of the sensor network (e.g., including GPS receiver 240, camera 245, and/or accelerometer 250) may be external to the positioning module 200 and the object detection module 202, and the device interface 220 may still provide interface capabilities for interaction with such components. Automatic responses such as operational control functions that implement automatic actions to be taken responsive to detection of certain stimuli may also be provided via the device interface 220. For example, shutdown of the cutting motor 62 (e.g., responsive to tipping or lifting of the robotic vehicle 10), stopping movement or changing direction of the robotic vehicle 100 (e.g., responsive to encountering an object or boundary) may be initiated under control of the processing circuitry 210 via interfaces provided by the device interface 220. Additionally or alternatively, interactions implemented via the provision of control signals to the functional units 270 may be initiated via the device interface 220.

In embodiments employing a sensor network, the sensor network may include one or more sensors (e.g., sensors 60 and/or collision sensors 70 and lifting sensors 72) disposed at any of various locations on the robotic vehicle 100 to monitor various parameters. For example, one or more sensors may determine vehicle speed/direction, vehicle location, object presence, vehicle orientation and/or the like. Sensors may also be used to determine motor run time, machine work time, and other operational parameters. In some embodiments, positioning and/or orientation sensors (e.g., global positioning system (GPS) receiver 240 and/or accelerometer 250) may be included to monitor, display and/or record data regarding vehicle position and/or orientation. In this regard, for example, the GPS receiver 240 may be configured to generate map data corresponding to latitude, longitude, speed, elevation, time, data and/or the like of the riding yard maintenance vehicle 10, and communicate such data to the processing circuitry 210. Meanwhile, for example, the accelerometer 250 may be configured to generate data corresponding to horizontal, vertical, and rotational accelerations of the riding yard maintenance vehicle 10, and communicate such data to the processing circuitry 210. As such, information such as pitch angle, roll angle and yaw angle may be determinable using one or more sensors of the sensor network. Moreover, distance and/or direction from a particular point of reference may be determined. Data from the sensors (including the data from the GPS receiver 240, the accelerometer 250 and/or other sensors) may be fed to the processing circuitry 210 for storage, display, or for use in connection with applications that may be executed by processing circuitry 210.

The positioning module 200 may be configured to utilize one or more sensors (e.g., sensors 60, which may include GPS receiver 240, camera 245 and/or accelerometer 250) to determine a location of the robotic vehicle 100. The robotic vehicle 100 (or more specifically, the control circuitry 130) may use the location information to determine a mower track and provide full coverage of the parcel 110 to ensure the entire parcel 110 is mowed. The positioning module 200 may therefore be configured to determine a location of the robotic vehicle 100 relative to the map data 140 descriptive of the parcel 110.

The object detection module 202 may employ one or more sensors (e.g., sensors 60, camera 245, and/or collision sensors 70) to determine when an object is detected. When an object (e.g., physical object, sensor, GPS coordinates, virtual pin, etc.) is detected, the processing circuitry 210 may be informed so that the location of the robotic vehicle 100 at the time of detection of the detected object may be noted. Thus, when an indication is received from the object detection module 202 to inform the processing circuitry 210 that the detected object has been encountered, the processing circuitry 210 may access position information from the positioning module 200 to associate the detected object with the corresponding location. The processing circuitry 210 may further utilize the sensors (e.g., the GPS receiver 240, camera 245 and/or accelerometer 250) to attempt to determine an identity of the object encountered. For example, the processing circuitry 210 may utilize the GPS receiver 240 to determine whether the object is encountered at a location corresponding to the known location of a reference object, utilize the camera 245 to determine if the object visually matches a known image of a reference object, and/or utilize the accelerometer 250 to determine whether the object is located at a distance and/or direction from a reference object that matches a known distance and/or direction that a known reference object has from the reference object.

The processor 212 may be embodied in a number of different ways. For example, the processor 212 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor 212 may be configured to execute instructions stored in the memory 214 or otherwise accessible to the processor 212. As such, whether configured by hardware or by a combination of hardware and software, the processor 212 may represent an entity (e.g., physically embodied in circuitry - in the form of processing circuitry 210) capable of performing operations according to embodiments of the present invention while configured accordingly. Thus, for example, when the processor 212 is embodied as an ASIC, FPGA or the like, the processor 212 may be specifically configured hardware for conducting the operations described herein. Alternatively, as another example, when the processor 212 is embodied as an executor of software instructions, the instructions may specifically configure the processor 212 to perform the operations described herein.

In an example embodiment, the processor 212 (or the processing circuitry 210) may be embodied as, include or otherwise control the positioning module 200 and the object detection module 202. As such, in some embodiments, the processor 212 (or the processing circuitry 210) may be said to cause each of the operations described in connection with the positioning module 200 and the object detection module 202 by directing the positioning module 200 and the object detection module 202, respectively, to undertake the corresponding functionalities responsive to execution of instructions or algorithms configuring the processor 212 (or processing circuitry 210) accordingly. As an example, the positioning module 200 may be configured to record position and/or orientation information of the robotic vehicle 100 and the object detection module 202 may be configured to record or otherwise identify interactions with objects as described herein. The processing circuitry 210 may then, in some cases, process the information from one or both of the positioning module 200 and the object detection module 202 to avoid objects, generate alerts, warnings, position histories, map data identifying known and/or unknown object locations, and/or the like.

In an exemplary embodiment, the memory 214 may include one or more non-transitory memory devices such as, for example, volatile and/or non-volatile memory that may be either fixed or removable. The memory 214 may be configured to store information, data, applications, instructions or the like for enabling the positioning module 200 and/or the object detection module 202 to carry out various functions in accordance with exemplary embodiments of the present invention. For example, the memory 214 could be configured to buffer input data for processing by the processor 212. Additionally or alternatively, the memory 214 could be configured to store instructions for execution by the processor 212. As yet another alternative, the memory 214 may include one or more databases that may store a variety of data sets responsive to input from the sensor network. Among the contents of the memory 214, applications may be stored for execution by the processor 212 in order to carry out the functionality associated with each respective application. In some cases, the applications may include a comparison of information indicative of a detected object to stored information about the parcel 110 currently being worked in order to determine whether the detected object is a known object.

Thus, for example, the memory 214 may store a parcel descriptor file including map data 140 defining boundaries 150 of the parcel 110 and location information identifying any known (e.g., reference) objects on the parcel 110 along with their respective locations or identifying characteristics (e.g., GPS coordinates or distance/direction from another known location or position, or a reference image). When the detected object is encountered, the map data 140 of the parcel descriptor file may be accessed (via the processing circuitry 210) to determine whether the detected object correlates to one of the reference objects on the parcel 110 via a comparison of the location of the detected object to the corresponding locations of known objects on the parcel 110 or via a comparison of a reference image to a current image. If a reference object on the parcel 110 is found to match the location of the detected object, the detected object may be determined (via the processing circuitry 210) to be a corresponding one of the reference objects. Boundary positions may then be determined and the robotic vehicle 100 may be steered in a manner that keeps the robotic vehicle 100 within the work area 112.

In some embodiments, the reference objects may be marked with unique, optically readable marks. Accordingly, for example, each unique mark may be identified and its position may be known on the map data 140. The robotic vehicle 100 may then be further programmed to move relative to each known reference object in a particular manner to achieve complete coverage of the work area 112 without transiting outside of the work area 112. In some cases, the work area 112 may be defined as a polygon, or as a series of adjacent or relatively nearby polygons, so that the robotic vehicle 110 may sequentially mow polygonal shaped work areas. The camera 245 may be used to identify or read unique markings and, in some cases, employ triangulation, stereo view, and/or the like to determine a location relative to the reference object 120, 122, 124, 126. Given the known location of the boundaries 150 relative to the reference objects, if the object can be determined as a reference object and the location of the robotic vehicle 100 can be determined relative to the reference object, then the position of the robotic vehicle 100 relative to the boundaries 150 can be determined. In some cases, the markings may be defined to indicate or represent a sequential ordering of the reference objects. In a similar manner, one or more reference objects may be uniquely marked or located (e.g., coordinates) and identified for exclusion areas for which the robotic vehicle is not to enter and/or work, while the positions of these reference objects may be known on the map data 140. In this regard, one or more exclusion areas can be similarly determined relative to reference objects associated with a particular or desired exclusion area.

In an example embodiment, the processing circuitry 210 may be configured to record the locations of any and all reference objects and associate the locations with GPS coordinates. Thus, for example, the processing circuitry may be configured to "learn" the locations of the reference objects and therefore also "learn" the locations of the boundaries 150. After learning the boundaries 150 in terms of GPS coordinates (or in terms of distance from a known starting point such as the charging station), the robotic vehicle 100 may simply operate within the work area 112, while not operating within any desired or selected exclusion zones associated with certain reference objects, based on the learned information. Thus, for example, the reference objects themselves (all or a portion thereof) may be removed.

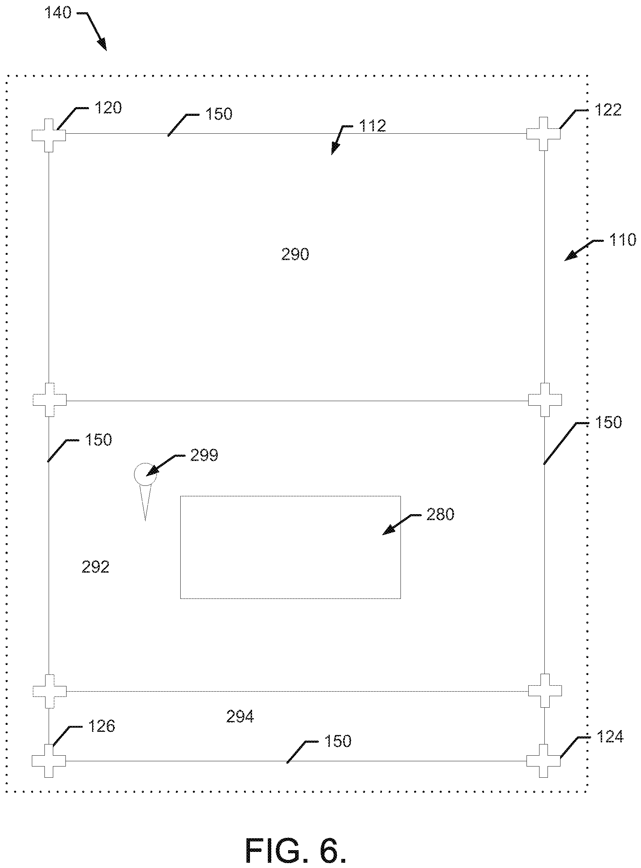

In some embodiments, a plurality of discrete areas, such as one or more areas to be worked by a robotic vehicle and one or more exclusion areas to be avoided by a robotic vehicle, may further be defined within the work area 112. For example, FIG. 6 shows an example in which multiple workable areas (e.g., areas in which the robotic vehicle may operate) 290, 292, and 294 defined by respective sets of reference objects (e.g., sensors, GPS coordinates, etc.). FIG. 6 also shows an example in which a default exclusion area 280, which may represent the footprint of a house or other structure, which may be defined by a set of reference objects as discussed previously. FIG. 6, however, also illustrates an example in which one of the plurality of discrete areas has been selected by an operator to be excluded from operation by a robotic vehicle. In particular, area 292 has been selected by an operator by virtual placement of a virtual pin 299 on the graphical representation of the map data 140. In this regard, the processing circuitry 210 may be configured to recognize the location of the virtual pin 299 relative to the plurality of discrete areas 290, 292, and 294 and associate this virtual positioning of the virtual pin 299 with the appropriate discrete area 292 for exclusion of operation by a robotic vehicle. For instance, FIG. 6 illustrates an example in which discrete area 292 has been designated by an operator to be excluded from operation by a robotic vehicle. In this regard, the processing circuitry 210 may recognize that the virtual location of the virtual pin 299 is positioned within discrete area 292. In some embodiments, the exclusion of the discrete area 292 may comprise operation of the robotic vehicle in which the robotic vehicle does not enter the discrete area 292. Alternatively, the exclusion of the discrete area 292 may comprise operation of the robotic vehicle in which the robotic vehicle may enter the discrete area 292, for example to move from area 290 to area 294, but operation of any functional features (e.g., cutting blade, etc.) are not allowed. In such instances, for example, the robotic vehicle may optionally enter the selected-exclusion area 292, but working (e.g., cutting grass, watering, etc.) of the selected-exclusion area 292 is not permitted.

In some embodiments, rather than utilizing physical objects for the reference objects, as noted above, the reference objects can comprise a painted line, marking (visible or invisible), series of coordinates defining a virtual reference line that can be detected by a sensor, one or more virtual pins placed by an operator on a graphical illustration of the map data, or a wearable device (e.g., sensor) may be employed as one or more alternatives. Other information about details regarding the map data 140 may also be stored in some embodiments. For example, information about fence location, gravel, concrete or paved path location, road location, object location (i.e., non-reference objects), and/or the like may also be stored in connection with the map data 140.

In some embodiments, the reference objects may comprises sensors 17 (as shown in FIG. 1), which may comprise stationary sensors or mobile sensors. In some embodiments, the sensors 17 may comprise a wearable sensor that may be directly or indirectly detected or recognized by the robotic vehicle 10. For example, the control circuitry 12 may be configured to directly communicate wirelessly with a wearable sensor may. For instance, the robotic vehicle 10 may directly detect or recognize the wearable sensor via one or more on-board sensors located on the robotic vehicle. In this regard, the robotic vehicle 10 may be configured to wireless communicate directly with the wearable sensor. For example, the direct communication between the wearable sensor 17 and the robotic vehicle 10 may comprise a wireless communication accomplished by short range or other radios, such as Bluetooth, WiFi, Zigbee, RFID (near field communication), GSM, or other proprietary or standard based communication mechanisms. In some embodiments, the wearable sensor and the robotic vehicle my indirectly communicate through the network 46 as shown in FIG. 1 and discussed previously. The control circuitry 12 may be configured for controlling the operation of the robotic vehicle 10 upon detection or recognition, whether directly or indirectly, of the wearable sensor 17 by operating the robotic vehicle to not enter and/or perform work in a defined area (e.g., 290, 292, or 294 of FIG. 6) in which the wearable sensor is located. For example, a wearable sensor may be attached to a pet or child to ensure that the robotic vehicle does not enter and/or perform work (e.g., cutting grass) in a defined area (e.g., a discrete area located within the parcel) in which the pet or child is located. The wearable sensors, for example, may comprise any article that may be worn or carried by any mammal (e.g., human or pet).

In an example embodiment, the processing circuitry 210 may be configured to generate display views and/or screen emulations to display data gathered by the sensor network and/or to display information generated based on the data gathered by the sensor network either locally or remotely (responsive to communication of the information via a wireless network or via communication established at the charge station 40. Alternatively or additionally, the processing circuitry 210 may be configured to generate reports or displays to illustrate information determinable based on the data. In some embodiments, the processing circuitry 210 may process, direct display of and/or store GPS position data (e.g., as a position history), speed information, information regarding object detection, map views, and/or the like. Thus, for example, the processing circuitry 210 may direct storage of the data or other information generated based on the data in the memory 214. As such, the processing circuitry 210 may organize the data or information for reporting or for use in other applications that may be locally or remotely executed. For example, the processing circuitry 210 may store data for reporting to a computer executing fleet management software to manage a fleet of lawn mowers for implementation of efficient service, maintenance and operation management.

In some cases, information associated with the positioning module 200 and/or the object detection module 202 itself may be extracted from the robotic vehicle 10 and mated with a remote network terminal or computer. The information stored on the memory 214 may then be extracted and thereby reported for fleet management or other applications. In other cases, the device interface 220 may be configured to wirelessly transmit information associated with the positioning module 200 and/or the object detection module 202 to a remote computer to enable data processing to be accomplished on the remote computer. For example, in some cases, Bluetooth, WiFi or other wireless communication modules may be provided by the device interface 220 in order to allow wireless downloading of software, support information or other data, or allow wireless uploading of data to network devices for support, management or other purposes. In some embodiments, Bluetooth, WiFi or other short range wireless communication modules may be used to communicate data to an intermediate device (e.g., a cell phone), which may then communicate the data to a computer or other device at which certain analysis and/or display may be performed. In still other cases, a removable memory device may be used to transfer information from the memory 214 to the removable memory device and thereafter to the remote computer. Thus, in some embodiments, the map data 140 may be communicated to an external computer and may be manipulated thereat, or may be correlated to other map information (e.g., map information from web based mapping services).

In some cases, information may also be uploaded from the remote network terminal or computer to the positioning module 200 and/or the object detection module 202. For example, upgrading software to improve the functionality of the positioning module 200 and/or the object detection module 202 may be uploaded. In some embodiments, software upgrading user interface capabilities, adding new sensor interface capability, and/or adding other improved functionality may be added via upload in order to upgrade the positioning module 200 and/or the object detection module 202.

Accordingly, example embodiments may avoid the use of a boundary wire by placing reference objects that are detectable by the robotic vehicle at one or more locations of a work area. The reference objects may be mapped to map data and may be used to either learn boundaries of the work area or one or more discrete workable zones within the parcel of interest (for removal prior to subsequent working of the work area) or assist in defining those boundaries while the robotic vehicle operates in the work area as a whole or in one or more workable zones within the parcel of interest.

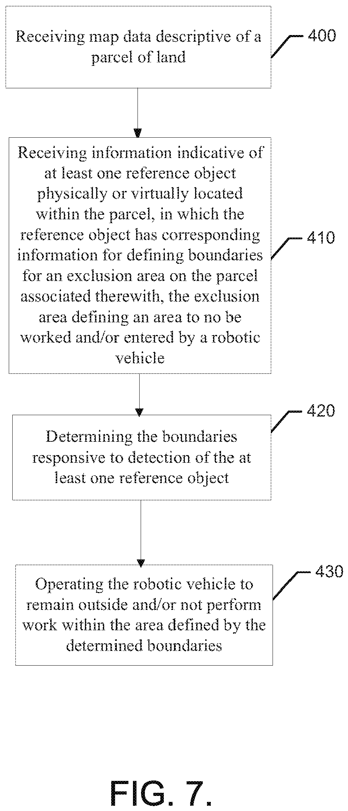

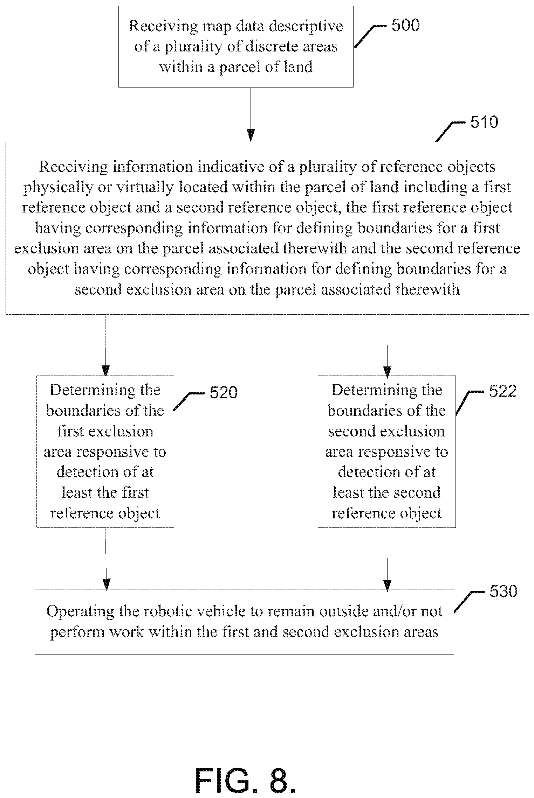

Embodiments of the present invention may therefore be practiced using an apparatus such as the one depicted in FIG. 5. However, other embodiments may be practiced in connection with a computer program product for performing embodiments of the present invention. As such, for example, each block or step of the flowcharts of FIG. 7 and FIG. 8, and combinations of blocks in the flowchart, may be implemented by various means, such as hardware, firmware, processor, circuitry and/or another device associated with execution of software including one or more computer program instructions. Thus, for example, one or more of the procedures described above may be embodied by computer program instructions, which may embody the procedures described above and may be stored by a storage device (e.g., memory 214) and executed by processing circuitry (e.g., processor 212).

As will be appreciated, any such stored computer program instructions may be loaded onto a computer or other programmable apparatus (i.e., hardware) to produce a machine, such that the instructions which execute on the computer or other programmable apparatus implement the functions specified in the flowchart block(s) or step(s). These computer program instructions may also be stored in a computer-readable medium comprising memory that may direct a computer or other programmable apparatus to function in a particular manner, such that the instructions stored in the computer-readable memory produce an article of manufacture including instructions to implement the function specified in the flowchart block(s) or step(s) illustrated in FIG. 7 and FIG. 8. The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the flowchart block(s) or step(s) illustrated in FIG. 7 and FIG. 8. In this regard, a method according to example embodiments of the invention may include any or all of the operations shown in FIG. 7 and/or FIG. 8. Moreover, other methods derived from the descriptions provided herein may also be performed responsive to execution of steps associated with such methods by a computer programmed to be transformed into a machine specifically configured to perform such methods.

In an example embodiment, a method of controlling the operation of a robotic vehicle relative to a parcel of land, as shown in FIG. 7, may include receiving map data descriptive of a parcel of land 400 and receiving information indicative of at least one reference object physically or virtually located within the parcel, in which the reference object has corresponding information for defining boundaries for an exclusion area on the parcel associated therewith 410. In some embodiments, the exclusion area may define an area to not be worked and/or entered by a robotic vehicle. The method may also comprise determining the boundaries responsive to detection of the at least one reference object 420 and operating the robotic vehicle to remain outside and/or not perform work within the area defined by the determined boundaries. The at least one reference object, in some embodiments, may comprise one or more of physical objects, sensors, wearable sensors (e.g., watch or phone worn or carried by an individual), coordinates (e.g., GPS coordinates), and virtual pin(s) that has virtually been disposed on a graphical illustration of map data by an operator.

The operations 400-430 may also be modified, augmented or amplified in some cases. For example, in some embodiments, the method may further include (1) receiving task instructions for the parcel of land. In some embodiments, whether or not the method is modified to include (1), (2) the method may include enabling an operator to interface with a graphical representation of the parcel. In some embodiments, whether or not the method is modified to include (1) and/or (2), (3) the method may further comprise enabling the operator to select one or more exclusion areas. In some embodiment, for example, the selection of the one or more exclusion areas comprises enabling the operator to dispose a virtual pin on or within one the one or more areas illustrated by the graphical representation. In some cases, any or all of (1) to (3) may be employed.

In an example embodiment, an apparatus for performing the method of FIG. 7 above, for example, may comprise a processor (e.g., the processor 212) configured to perform some or each of the operations (400-430) described above. The processor 212 may, for example, be configured to perform the operations (400-430) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 400-430 may comprise, for example, the control circuitry 130. Additionally or alternatively, at least by virtue of the fact that the processor 212 may be configured to control or even be embodied as the control circuitry 130, the processor 212 and/or a device or circuitry for executing instructions or executing an algorithm for processing information as described above may also form example means for performing operations 400-430.

In another example embodiment, a method of controlling the operation of a robotic vehicle relative to a parcel of land, as shown in FIG. 8, may include receiving map data descriptive of a plurality of discrete areas within a parcel of land 500 and receiving information indicative of a plurality of reference objects physically or virtually located within the parcel of land including a first reference object and a second reference object, in which the first reference object has corresponding information for defining boundaries for a first exclusion area on the parcel associated therewith and the second reference object has corresponding information for defining boundaries for a second exclusion area on the parcel associated therewith 510. The first exclusion area may define a first area to not be worked and/or entered by a robotic vehicle. The method may also comprise determining the boundaries of the first exclusion area responsive to detection of at least the first reference object 520. As also illustrated by FIG. 8, the method may also comprise determining the boundaries of the second exclusion area responsive to detection of at least the second reference object 522. The method may further comprise operating the robotic vehicle to remain outside and/or not perform work within the first area and second area defined by the determined boundaries 530. The first and second reference objects, in some embodiments, may comprise one or more of physical objects, sensors, wearable sensors (e.g., watch or phone worn or carried by an individual), coordinates (e.g., GPS coordinates), and virtual pin(s) that has virtually been disposed on a graphical illustration of map data by an operator. In some embodiments, at least the first or second reference object comprises a virtual pin that has been virtually disposed on the parcel by an operator. Additionally or alternatively, at least the first or second reference object comprises a wearable sensor.

The operations 400-430 may also be modified, augmented or amplified in some cases. For example, in some embodiments, the method may further include (1) receiving task instructions for the parcel of land. In some embodiments, whether or not the method is modified to include (1), (2) the method may include enabling an operator to interface with a graphical representation of the parcel. In some embodiments, whether or not the method is modified to include (1) and/or (2), (3) the method may further comprise enabling the operator to select one or more exclusion areas. In some embodiment, for example, the selection of the one or more exclusion areas comprises enabling the operator to dispose a virtual pin on or within one the one or more areas illustrated by the graphical representation. In some cases, any or all of (1) to (3) may be employed.

In an example embodiment, an apparatus for performing the method of FIG. 8 above, for example, may comprise a processor (e.g., the processor 212) configured to perform some or each of the operations (500-530) described above. The processor 212 may, for example, be configured to perform the operations (500-530) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 500-530 may comprise, for example, the control circuitry 130. Additionally or alternatively, at least by virtue of the fact that the processor 212 may be configured to control or even be embodied as the control circuitry 130, the processor 212 and/or a device or circuitry for executing instructions or executing an algorithm for processing information as described above may also form example means for performing operations 500-530.

## Claims

1. A method, comprising:
receiving map data descriptive of a parcel (110) of land;
receiving information indicative of at least one reference object physically or virtually located within the parcel, the reference object having corresponding information for defining boundaries for an exclusion area (280) on the parcel associated therewith, the exclusion area defining an area to not be worked or entered by a robotic vehicle;
determining the boundaries responsive to detection of the at least one reference object; and
operating the robotic vehicle to remain outside or not perform work within the area defined by the boundaries, wherein the at least one reference object comprises a virtual pin (299) virtually disposed on a graphical representation of the the parcel by an operator.

2. The method claim 1, wherein receiving map data descriptive of a parcel of land comprises receiving map data descriptive of a plurality of discrete areas located within a parcel of land and receiving information indicative of a plurality of reference objects physically or virtually located within the parcel including at least a first reference object and a second reference object, the first reference object having corresponding information for defining boundaries for a first exclusion area on the parcel associated therewith and the second reference object having corresponding information for defining boundaries for a second exclusion area on the parcel associated therewith; determining the boundaries of the first exclusion area responsive to detection of at least the first reference object and the second exclusion area responsive to detection of at least the second reference object; and operating the robotic vehicle to remain outside or not perform work within the first and second exclusion areas, wherein at least the first or second reference object comprises a pin virtually disposed on a graphical representation of the parcel by an operator.

3. The method of any preceding claim, further comprising receiving task instructions for the parcel of land.

4. The method of any preceding claim, further comprising enabling an operator to interface with a graphical representation of the parcel.

5. The method of claim 4, further comprising enabling the operator to select one or more exclusion areas.

6. The method of claim 5, wherein the selection of the one or more exclusion areas comprises enabling the operator to dispose a virtual pin on or within one the one or more exclusion areas illustrated by the graphical representation.

7. An apparatus, comprising processing circuitry configured for:
receiving map data descriptive of a parcel (110) of land;
receiving information indicative of at least one reference object physically or virtually located within the parcel, the reference object having corresponding information for defining boundaries for an exclusion area (280) on the parcel associated therewith, the exclusion area defining an area to not be worked by a robotic vehicle;
determining the boundaries responsive to detection of the at least one reference object; and
operating the robotic vehicle to remain outside the area defined by the boundaries, wherein the reference object comprises a virtual pin (299) virtually disposed on a graphical representation of the parcel by a user.

8. The apparatus of claim 7, wherein the processing circuitry is further configured for receiving map data descriptive of a parcel of land comprises receiving map data descriptive of a plurality of discrete areas located within a parcel of land and receiving information indicative of a plurality of reference objects physically or virtually located within the parcel including at least a first reference object and a second reference object, the first reference object having corresponding information for defining boundaries for a first exclusion area on the parcel associated therewith and the second reference object having corresponding information for defining boundaries for a second exclusion area on the parcel associated therewith; determining the boundaries of the first exclusion area responsive to detection of at least the first reference object and the second exclusion area responsive to detection of at least the second reference object; and operating the robotic vehicle to remain outside the first and second exclusion areas, wherein at least the first or second reference object comprises a pin virtually disposed on a graphical representation of the parcel by a user.

9. The apparatus of claim 7 or 8, wherein the processing circuitry is further configured for receiving task instructions for the parcel of land.

10. The apparatus of any of claims 7-9, wherein the processing circuitry is further configured for enabling an operator to interface with a graphical representation of the parcel.

11. The apparatus of claim 10, wherein the processing circuitry is further configured for enabling the operator to select one or more exclusion areas.

12. The apparatus of claim 11, wherein the processing circuitry is further configured for enabling the operator to dispose a virtual pin on or within one the one or more exclusion areas illustrated by the graphical representation.

## Patentansprüche

1. Verfahren, umfassend:
Empfangen von Kartendaten, die eine Landparzelle (110) beschreiben;
Empfangen von Informationen, die auf zumindest ein Referenzobjekt hinweist, das physisch oder virtuell innerhalb der Parzelle angeordnet ist, wobei das Referenzobjekt entsprechende Informationen zur Definition von Begrenzungen für einen Ausschlussbereich (280) auf der zugeordneten Parzelle aufweist, wobei der Ausschlussbereich einen Bereich definiert, der nicht von dem Roboterfahrzeug bearbeitet oder befahren wird;
Bestimmen der Begrenzungen in Ansprechen auf die Erfassung des zumindest einen Referenzobjekts; und
Betreiben des Roboterfahrzeugs auf solche Weise, dass es außerhalb des durch die Begrenzungen definierten Bereiches bleibt oder darin keine Arbeit ausführt, wobei das zumindest eine Referenzobjekt eine virtuelle Stecknadel (299) umfasst, die durch eine Bedienperson auf einer graphischen Darstellung der Parzelle platziert wird.

2. Verfahren nach Anspruch 1, wobei das Empfangen von Kartendaten, die eine Landparzelle beschreiben, umfasst: das Empfangen von Kartendaten, die eine Vielzahl von diskreten Bereichen innerhalb einer Landparzelle beschreiben, und das Empfangen von Informationen, die auf eine Vielzahl von Referenzobjekten hinweisen, die physisch oder virtuell innerhalb der Parzelle angeordnet sind, darunter zumindest ein erstes Referenzobjekt und ein zweites Referenzobjekt, wobei das erste Referenzobjekt entsprechende Informationen zur Definition von Begrenzungen für einen ersten Ausschlussbereich auf der zugeordneten Parzelle aufweist, und das zweite Referenzobjekt entsprechende Informationen zur Definition von Begrenzungen für einen zweiten Ausschlussbereich auf der zugeordneten Parzelle aufweist; Bestimmen der Begrenzungen des ersten Ausschlussbereichs in Ansprechen auf die Erfassung zumindest des ersten Referenzobjekts und des zweiten Ausschlussbereichs in Ansprechen auf die Erfassung zumindest des zweiten Referenzobjekts; und Betreiben des Roboterfahrzeugs auf solche Weise, dass es außerhalb der ersten und zweiten Ausschlussbereiche bleibt oder darin keine Arbeit ausführt, wobei zumindest das erste oder zweite Referenzobjekt eine Stecknadel umfasst, die virtuell durch eine Bedienperson auf einer graphischen Darstellung der Parzelle platziert wird.

3. Verfahren nach einem der vorhergehenden Ansprüche, ferner umfassend das Empfangen von Arbeitsanweisungen für die Landparzelle.

4. Verfahren nach einem der vorhergehenden Ansprüche, ferner umfassend das Bereitstellen einer Schnittstelle für einen Benutzer mit einer graphischen Darstellung der Parzelle.

5. Verfahren nach Anspruch 4, ferner umfassend das Ermöglichen der Auswahl eines oder mehrerer Ausschlussbereiche für die Bedienperson.

6. Verfahren nach Anspruch 5, wobei die Auswahl des einen oder der mehreren Ausschlussbereiche umfasst, der Bedienperson zu ermöglichen, eine virtuelle Stecknadel auf oder innerhalb des einen oder der mehreren Ausschlussbereiche, die durch die graphische Darstellung veranschaulicht werden, zu platzieren.

7. Vorrichtung umfassend eine Verarbeitungsschaltung, die dazu ausgestaltet ist:
Empfangen von Kartendaten, die eine Landparzelle (110) beschreiben;
Empfangen von Informationen, die auf zumindest ein Referenzobjekt hinweisen, das physisch oder virtuell innerhalb der Parzelle angeordnet ist, wobei das Referenzobjekt entsprechende Informationen zur Definition von Begrenzungen für einen Ausschlussbereich (280) auf der zugeordneten Parzelle aufweist, wobei der Ausschlussbereich einen Bereich definiert, der nicht von dem Roboterfahrzeug bearbeitet werden soll;
Bestimmen der Begrenzungen in Ansprechen auf die Erfassung des zumindest einen Referenzobjekts; und
Betreiben des Roboterfahrzeugs auf solche Weise, dass es außerhalb des durch die Begrenzungen definierten Bereiches bleibt, wobei das Referenzobjekt eine virtuelle Stecknadel (299) umfasst, die virtuell durch eine Bedienperson auf einer graphischen Darstellung der Parzelle platziert wird.

8. Vorrichtung nach Anspruch 7, wobei die Verarbeitungsschaltung ferner dazu ausgestaltet ist, Kartendaten zu empfangen, die eine Landparzelle beschreiben, umfassend das Empfangen von Kartendaten, die eine Vielzahl von diskreten Bereichen innerhalb einer Landparzelle beschreiben, und das Empfangen von Informationen, die auf eine Vielzahl von Referenzobjekten hinweisen, die physisch oder virtuell innerhalb der Parzelle angeordnet sind, darunter zumindest ein erstes Referenzobjekt und ein zweites Referenzobjekt, wobei das erste Referenzobjekt entsprechende Informationen zur Definition von Begrenzungen für einen ersten Ausschlussbereich auf der zugeordneten Parzelle aufweist, und das zweite Referenzobjekt entsprechende Informationen zur Definition von Begrenzungen für einen zweiten Ausschlussbereich auf der zugeordneten Parzelle aufweist; Bestimmen der Begrenzungen des ersten Ausschlussbereichs in Ansprechen auf die Erfassung zumindest des ersten Referenzobjekts und des zweiten Ausschlussbereichs in Ansprechen auf die Erfassung zumindest des zweiten Referenzobjekts; und Betreiben des Roboterfahrzeugs auf solche Weise, dass es außerhalb der ersten und zweiten Ausschlussbereiche bleibt oder darin keine Arbeit ausführt, wobei zumindest das erste oder zweite Referenzobjekt eine Stecknadel umfasst, die virtuell durch einen Benutzer auf einer graphischen Darstellung der Parzelle platziert wird.

9. Vorrichtung nach Anspruch 7 oder 8, wobei die Verarbeitungsschaltung ferner dazu ausgestaltet ist, Arbeitsanweisungen für die Landparzelle zu empfangen.

10. Vorrichtung nach einem der Ansprüche 7-9, wobei die Verarbeitungsschaltung dazu ausgestaltet ist, einer Bedienperson eine Schnittstelle mit einer graphischen Darstellung der Parzelle bereitzustellen.

11. Vorrichtung nach Anspruch 10, wobei die Verarbeitungsschaltung ferner dazu ausgestaltet ist, der Bedienperson zu ermöglichen, einen oder mehrere Ausschlussbereiche auszuwählen.

12. Verfahren nach Anspruch 11, wobei die Verarbeitungsschaltung ferner dazu ausgestaltet ist, der Bedienperson zu ermöglichen, eine virtuelle Stecknadel auf oder innerhalb des einen oder der mehreren Ausschlussbereiche, die durch die graphische Darstellung veranschaulicht werden, zu platzieren.

## Revendications

1. Procédé, comprenant le fait :
de recevoir des données de carte décrivant une parcelle (110) de terrain ;
de recevoir des informations indiquant au moins un objet de référence situé physiquement ou virtuellement dans la parcelle, l'objet de référence ayant des informations correspondantes pour définir des frontières pour une zone d'exclusion (280) sur la parcelle associée à celui-ci, la zone d'exclusion définissant une zone ne devant pas être travaillée ou accédée par un véhicule robotique ;
de déterminer les frontières en réponse à la détection de l'au moins un objet de référence ; et
de faire fonctionner le véhicule robotique pour rester en dehors de ou ne pas effectuer un travail dans la zone définie par les frontières, où l'au moins un objet de référence comprend une broche virtuelle (299) disposée virtuellement sur une représentation graphique de la parcelle par un opérateur.

2. Procédé de la revendication 1, dans lequel la réception de données de carte décrivant une parcelle de terrain comprend la réception de données de carte décrivant une pluralité de zones discrètes situées dans une parcelle de terrain et la réception d'informations indiquant une pluralité d'objets de référence situés physiquement ou virtuellement dans la parcelle comportant au moins un premier objet de référence et un deuxième objet de référence, le premier objet de référence ayant des informations correspondantes pour définir des frontières pour une première zone d'exclusion sur la parcelle associée à celui-ci et le deuxième objet de référence ayant des informations correspondantes pour définir des frontières pour une deuxième zone d'exclusion sur la parcelle associée à celui-ci ; la détermination des frontières de la première zone d'exclusion en réponse à la détection d'au moins le premier objet de référence et de la deuxième zone d'exclusion en réponse à la détection d'au moins le deuxième objet de référence ; et le fonctionnement du véhicule robotique pour rester en dehors de ou ne pas effectuer un travail dans les première et deuxième zones d'exclusion, où au moins le premier ou le deuxième objet de référence comprend une broche disposée virtuellement sur une représentation graphique de la parcelle par un opérateur.

3. Procédé de l'une des revendications précédentes, comprenant en outre la réception d'instructions de tâche pour la parcelle de terrain.

4. Procédé de l'une des revendications précédentes, comprenant en outre le fait de permettre à un opérateur d'assurer l'interface avec une représentation graphique de la parcelle.

5. Procédé de la revendication 4, comprenant en outre le fait de permettre à l'opérateur de sélectionner une ou plusieurs zone(s) d'exclusion.

6. Procédé de la revendication 5, dans lequel la sélection de la ou des plusieurs zone(s) d'exclusion comprend le fait de permettre à l'opérateur de disposer une broche virtuelle sur ou dans la ou les plusieurs zone (s) d'exclusion illustrée(s) par la représentation graphique.

7. Appareil, comprenant une circuiterie de traitement configurée :
pour recevoir des données de carte décrivant une parcelle (110) de terrain ;
pour recevoir des informations indiquant au moins un objet de référence situé physiquement ou virtuellement dans la parcelle, l'objet de référence ayant des informations correspondantes pour définir des frontières pour une zone d'exclusion (280) sur la parcelle associée à celui-ci, la zone d'exclusion définissant une zone ne devant pas être travaillée par un véhicule robotique ;
pour déterminer les frontières en réponse à la détection de l'au moins un objet de référence ; et
pour faire fonctionner le véhicule robotique pour rester en dehors de la zone définie par les frontières, où l'objet de référence comprend une broche virtuelle (299) disposée virtuellement sur une représentation graphique de la parcelle par un utilisateur.

8. Appareil de la revendication 7, dans lequel la circuiterie de traitement est en outre configurée pour la réception de données de carte décrivant une parcelle de terrain comprenant la réception de données de carte décrivant une pluralité de zones discrètes situées dans une parcelle de terrain et la réception d'informations indiquant une pluralité d'objets de référence situés physiquement ou virtuellement dans la parcelle comportant au moins un premier objet de référence et un deuxième objet de référence, le premier objet de référence ayant des informations correspondantes pour définir des frontières pour une première zone d'exclusion sur la parcelle associée à celui-ci et le deuxième objet de référence ayant des informations correspondantes pour définir des frontières pour une deuxième zone d'exclusion sur la parcelle associée à celui-ci ; la détermination des frontières de la première zone d'exclusion en réponse à la détection d'au moins le premier objet de référence et de la deuxième zone d'exclusion en réponse à la détection d'au moins le deuxième objet de référence ; et le fonctionnement du véhicule robotique pour rester en dehors des première et deuxième zones d'exclusion, où au moins le premier ou le deuxième objet de référence comprend une broche disposée virtuellement sur une représentation graphique de la parcelle par un utilisateur.

9. Appareil de la revendication 7 ou 8, dans lequel la circuiterie de traitement est en outre configurée pour recevoir des instructions de tâche pour la parcelle de terrain.

10. Appareil de l'une des revendications 7 à 9, dans lequel la circuiterie de traitement est en outre configurée pour permettre à un opérateur d'assurer l'interface avec une représentation graphique de la parcelle.

11. Appareil de la revendication 10, dans lequel la circuiterie de traitement est en outre configurée pour permettre à l'opérateur de sélectionner une ou plusieurs zone(s) d'exclusion.

12. Appareil de la revendication 11, dans lequel la circuiterie de traitement est en outre configurée pour permettre à l'opérateur de disposer une broche virtuelle sur ou dans la ou les plusieurs zone(s) d'exclusion illustrée(s) par la représentation graphique.
